Europäisches Patentamt

European Patent Office

Office européen des brevets

(19)

(11) Publication number: **0 111 944**
A1

# (12) EUROPEAN PATENT APPLICATION

(21) Application number: 83201600.0

(22) Date of filing: 08.11.83

(51) Int. Cl.³: **B 60 G 11/46**
B 60 G 17/02, B 60 G 21/04

(30) Priority: 15.12.82 NL 8204849

(43) Date of publication of application:
27.06.84 Bulletin 84/26

(84) Designated Contracting States:
BE CH DE FR GB IT LI LU NL SE

(71) Applicant: Weweler B.V.
Kayersdijk 149
NL-7332 AP Apeldoorn(NL)

(72) Inventor: Zantinge, Johan Michiel
Methorsterweg 18
NL-6991 TX Rheden(NL)

(74) Representative: den Boer, Jan Johannes, Ir. et al,
Octrooibureau Polak & Charlouis Laan Copes van
Cattenburch 80
NL-2585 GD The Hague(NL)

(54) Wheel suspension system for a vehicle, in which the spring stiffness is dependent on the load.

(57) The wheel suspension system comprises leaf springs (5) and an additional spring assembly (10 - 14) between leaf springs and chassis (1). The spring assembly consists of a double transverse beam (12, 13) secured to the chassis, and air folding bags (15).

In order not to influence vehicle behaviour during braking a level control rod (32) acting on an air supply valve (36) for the bags (15) may be provided as well as a reaction rod (20, 21) preventing transverse loading of the bags (15).

EP 0 111 944 A1

./...

FIG. 1

Title: Wheel suspension system for a vehicle, in which the spring
stiffness is dependent on the load.

The invention relates to a wheel suspension system for a vehicle,
in which a wheel axle is suspended from the chassis by means of
leafsprings, which leafsprings are pivotable relative to the
chassis.

A similar wheel suspension is generally known, e.g. from
U.S. patent 4,097.034 and French patent 2.328.586.
A disadvantage of said known system is, that the spring comfort is
satisfying only when the vehicle is loaded. Particularly with
empty vehicle the springing is stiff i.e. the spring frequency is
too high.

The invention aims at eliminating this disadvantage by
so changing the spring characteristic that the spring frequency is
substantially constant through the complete loading range.

This is achieved according to the invention in that an
additional spring assembly is provided between the leaf springs wherein
one end of each leafspring is journalled by means of an eye on the
upper springleaf around a pivot, which is secured to a double transverse beam, having two parallel legs, the upper leg of which is
secured below a conventional transverse beam of the vehicle chassis
and in which a air folding bag is mounted between each of the ends
of both legs.

Both elements, namely the leaf spring and the bag, are
provided in series, whereby the spring displacement of the suspension
is increased and the springing becomes more elastic. The spring frequency is substantially constant and the spring resiliency approximates
that of a fully air sprung system.

The additional spring assembly may be mounted directly when
the vehicle is manufactured, but may also be mounted later on to
an existing vehicle. If in the last mentioned case the vehicle has a
load dependent braking system which increases the braking air pressure
when the height between the chassis and the wheel axle decreases, it is
important that this height is not influenced by the compression of the bags. Then the provision of the assembly does not influence the behaviour of the vehicle during braking.

In order to achieve this a level control rod may be adjustably secured according to the invention to the lower leg of the transverse beam, by means of which rod a control valve in a connecting conduit between the braking air system of the vehicle and the folding bags is actuated, said control valve being secured to the chassis. Thereby air is supplemented into the bags when the static load of the vehicle increases so that the bag height and thereby the height of the leaf spring end related to the chassis remains substantially constant and the compression of the bags does not influence said height.

There also exist so called rolling bags, which however, require a much larger mounting space in extended condition than the folding bags. Folding bags have a low mounting height, while at the same time they have a steeply progressive compression characteristic whereby a better anti-roll stability is obtained.

In that the spring ends which are supported on the chassis through the bags, are no longer secured to the chassis as with the exclusive application of leaf springs, no transverse forces can be transmitted between the chassis and the leaf spring.

A reaction rod may be provided between the legs of the transverse beam in order to receive said transverse forces, the rod preventing transverse loading of the bags. Longitudinal forces transmitted to the bags could cause breaking apart of the bags if a predetermined value is exceeded. This is avoided if a reaction rod is provided between the legs of the transverse beam, said rod being pivotally connected to both legs, a block of rubber or similar material being secured around the pivot pins, said block being exteriorly secured to the transverse beam, the rod comprising two parts, which are mutually connected such that they may pivot around their longitudinal axis relative to eachother.

By the pivotal connection of the rod parts, the lower ends of the bags may yield when a horizontal movement of the spring leaf end occurs together with the lower leg of the transverse beam, in that they rotate around the rod axis, whereby the connection points of the upper side and the lower side of the bag remain substantially vertically aligned. Thereby no breaking apart of the bags will occur.

Preferably both reaction rod parts are mutually pivotally connected by means of buttressthread. Then movement of the lower leg and the bags in the longitudinal direction of the chassis is permitted through relative rotation of the screw thread portions of the rod. Thereby one obtains a compact pivot structure and also the possibility to adjust the length of the rod such that the rod extends substantially horizontal in the stationary condition of the vehicule whereby the spring movement effects pivotal movements of the rod relative to the transverse beam through minimal transverse displacements of the bags.

Some trucks comprise, apart from the leaf spring, as the wheel suspension element, a second shorter leaf spring acting as auxiliary spring which is mounted on top of the first mentioned leaf spring. By the application of the bags according to the invention thereby the load distribution in both said leaf springs would be disturbed through dynamic springing so that the auxiliary spring will be overloaded. In order to prevent this, in a suspension having an auxiliary leaf spring, to which the invention is applied, an additional spring element, e.g. a rubber block, is provided between a fixed abutment on the chassis, adapted for engagement with the rear end of the auxiliary leaf spring and said rear end.

Thereby a better spring comfort is achieved in the loading range in which only the main spring is effective, as well as in the range in which both springs are effective. The transfer at the moment in which the auxiliary spring enters in operation is much more smooth as a result of the fact that the rubber element is present at the position in which otherwise only the fixed abutment for the auxiliary spring is present.

The invention will be further explained below with reference to the drawing, showing some embodiments of the wheel suspension according to the invention, given as examples only.

Fig. 1 shows a perspective rear view of the suspension of the rear wheels of a truck.

Fig. 2 is a side view of said suspension having single leaf springs

Fig. 3 shows a side view of the suspension having a leaf spring and an auxiliary leaf spring.

Fig. 4 shows a rear view of the wheel suspension having a reaction rod and an air control valve.

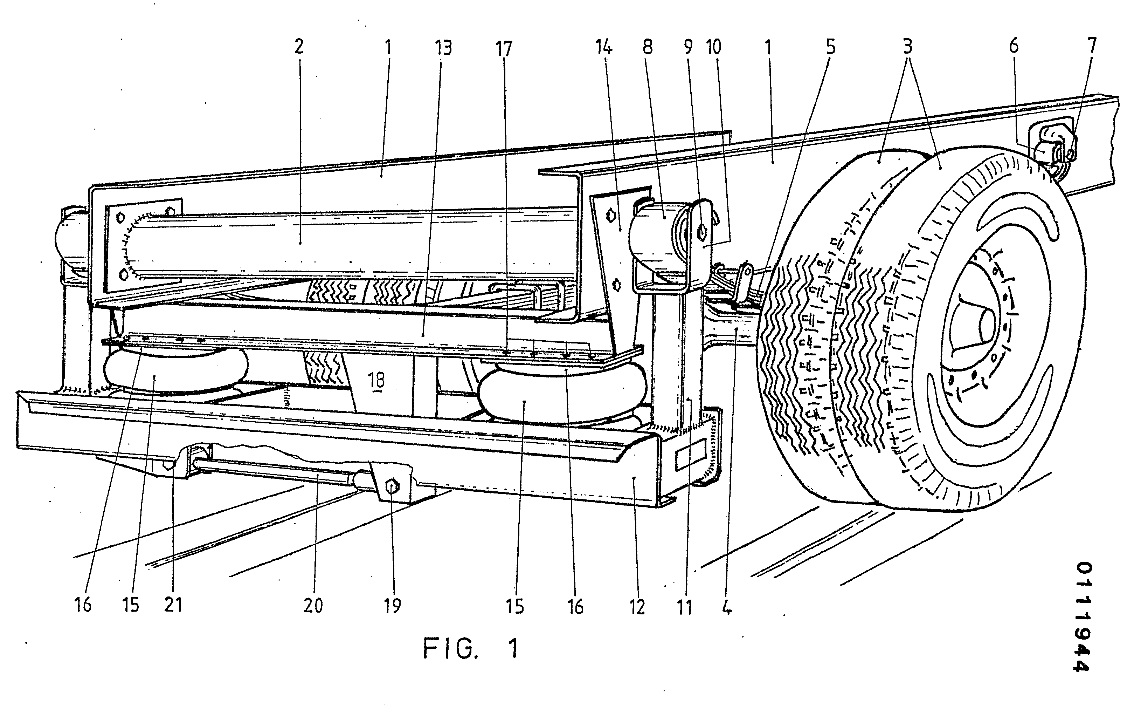

In fig. 1 the rear end of a truck is shown having longitudinal chassis beams 1 and a transverse beam 2, mutually securing the rear ends of said beams 1. Wheels 3 at one side of the truck are shown mounted on a wheel axle 4, which is suspended through a conventional leaf spring 5. The upper leaf of said leaf spring has an eye 6 shaped integrally therewith, which eye is journalled on a pivot pin 7, which is secured through the relative longitudinal beam 1 of the chassis 1. With the known wheel suspensions the rear end of the leaf spring is journalled to the chassis, e.g. through a spring cradle. However, according to the invention the eye 8 at the rear end of the upper leaf spring is journalled on a pin 9, which is secured in a U-shaped part 10, which, in the construction as shown, is secured through a tubular upright element 11 to the lower leg 12 of a double transverse beam. The upper leg 13 of said double transverse beam is secured through connecting plates 14 at both ends to both longitudinal beams 1 of the chassis.

Between both ends of both legs 12, 13 of the transverse beam a folding bag 15 is secured. Each folding bag is manufactured of rubber or similar material and comprises a metal ring 16 at the upper end and the lower end, said ring being provided with studs 17, whereby the upper ring is secured against the under side of the beam 13 and the lower ring (which is not visible in fig. 1) is secured to the bottom of the U-shaped lower beam 12.

A downwardly extending bracket 18 is secured to the upper beam 13, said bracket having a pivot 19 at its lower end which is pivotally connected to a reaction rod 20, 21, the part 21 of which is secured to the lower beam 12. This reaction rod will be discussed later on.

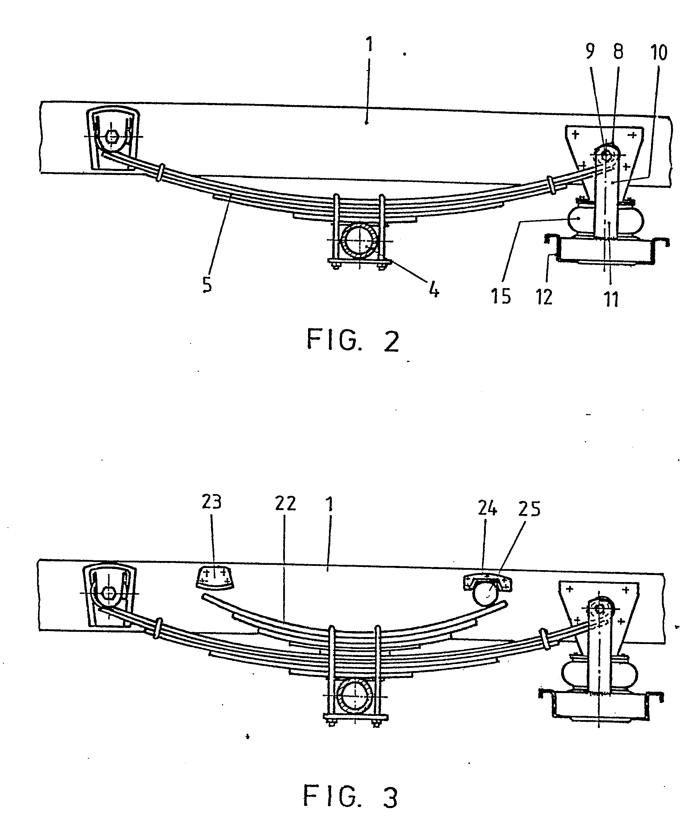

Figure 2 is a side view of said wheel suspension having a single leaf spring.

Figure 3 shows a side view of the wheel suspension having a duplicated leaf spring, e.g. a main leaf spring and an auxiliary leaf spring 22.

The same reference numbers indicate corresponding parts to the embodiment of figure 2. A conventional abutment 23 is secured to the longitudinal beam 1 over the front end of the auxiliary spring 22. The abutment for the rear end of the auxiliary spring has been replaced by a connecting means 24 for a rubber block 25 which may be in the shape of a solid cylinder, the axis of which extends parallel to the wheel axle. Said additional rubber spring between the auxiliary spring and the chassis promotes the correct maintenance of the distribution of the load to both leaf springs.

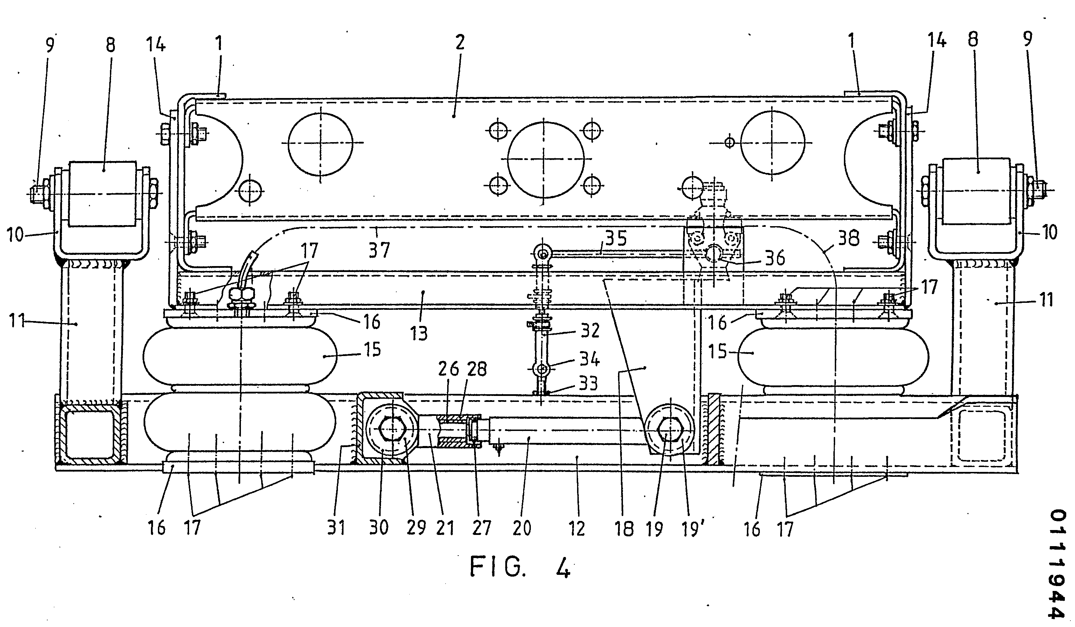

Fig. 4 again shows the wheel suspension of figure 1 in rear view which figure shows in more detailed manner the reaction rod 20, 21. The part 20 of the reaction rod is pivotally connected through a pivot pin 19 and a rubber sleeve 19' to the bracket 18 of the upper beam 13.

The free end of the rod part 20 is provided with buttress thread or similar screw thread 26 and is screwed into a tubular end 28 of the rod part 21, with the interposition of a sealing ring 27. The rod part 21 terminates in a pivot pin, which is parallel to the pivot pin 19, which in turn is secured by vulcanizing to a sleeve 29 of rubber or similar material surrounding said pin. A metal sleeve 30 has been secured by vulcanizing against the exterior of said sleeve 29, said sleeve 30 being secured to a U-shaped part 31, which has been welded to the lower leg 12 of the double transverse beam.

As said, the reaction rod 20 reduces the transmission of transverse forces from the chassis to the bags. The rubber sleeves 19' and 30 permit pivotal movements of the rod around the pins 19 and 29 but resist the deformation in the longitudinal direction, e.g. in the direction of the pin 28. The length of the reaction rod may be adjusted through the screw thread 26 and the sleeve 28 such that in unloaded condition the rod extends horizontally and the bags extend vertically.

In figure 4 the said level control rod 32 is shown which is adjustably secured at 33 to the lower leg 12 of the transverse beam. The rod 32 consists of two parts in that it has a pivot point 32

./6

whereby the rod may follow the transverse movement of the lower leg relative to the upper leg of the transverse beam. A valve actuating rod 35 is pivotally connected to the upper end of the rod 32, said rod 35 being connected at its other end to a rotary valve 36 which is secured to the upper leg 13. Said valve 36 is connected in an air circuit to which on the one hand a conduit is connected which in turn is connected to the braking air reservoir of the truck and on the other hand the circuit comprises conduits extending to both folding bags, namely the conduits 37 and 38.

As said thereby the height of the bags is kept substantially constant, independent of the load. When the bags are loaded they are compressed whereby the leg 13 moves towards the leg 12 of the transverse beam. Thereby the end of the valve actuating rod 35 connected to the control rod 32 moves upwardly and the valve 36 is adjusted thereby, so that it admits more air to the bags whereby they resume their original height.

--------

C L A I M S

1. A wheel suspension system for a vehicle, in which a wheel axle is suspended from the chassis through leaf springs and in which the leaf springs are pivotally mounted relative to the chassis, characterized in that an additional spring assembly is provided between the leaf springs (5) and the chassis (1), wherein one end of each leaf spring (5) is journalled through an eye (8) on the upper spring leaf around a pivot pin (9) which is secured to a double transverse beam, having two parallel legs, the upper leg (13) of which is secured to the under side of a conventional transverse beam (2) of the vehicle chassis and in which an air folding bag (15) is mounted between both ends of the legs (12, 13).

2. A wheel suspension system according to claim 1, characterized in that a level control rod (32) is adjustably secured to the lower leg (12) of the transverse beam, by which rod a control valve (36) in a connecting conduit (37, 38) between the braking air system of the vehicle and the folding bags (15) may be actuated, said control valve being secured in the chassis.

3. A wheel suspension system according to claim 1 or 2 characterized in that a reaction rod (20, 21) is provided between the legs (12, 13) of the transverse beam, said rod being pivotally connected to both legs (12, 13), a block (19',29) of rubber or similar material being secured around the pivot pins (19, 28), said block being exteriorly secured through the transverse beam, the rod comprising two parts which are mutually connected such that they are pivotal around their longitudinal axes.

4. A wheel suspension system according to claim 3, characterized in that both reaction rod parts (20, 21) are mutually pivotally connected through buttress screwthread (25).

5. A wheel suspension system according to one or more of the preceding claims, an auxiliary leaf spring being mounted over the leaf spring, characterized in that an additional spring element (25), e.g. a rubber block, is provided between a fixed abutment (24) on the

- 8 -                                    0111944

chassis for the rear end of the auxiliary leaf spring (22) and said rear end.

-------------

FIG. 1

1/3

0111944

0111944

FIG. 2

FIG. 3

FIG. 4

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 009 873 (SWEET) *The whole document* | 1-3 | B 60 G 11/46<br>B 60 G 17/02<br>B 60 G 21/04 |
| D,X | US-A-4 097 034 (SWEET) *The whole document* | 1,2 | |
| A | DE-C- 551 825 (DAIMLER BENZ) *The whole document* | 5 | |
| A | FR-A-1 133 448 (PERIER) *The whole document* | 4 | |
| A | FR-A-1 511 904 (BMW) *Figures 1,2* | 3 | |
| A | GB-A-1 033 490 (FRUEHAUF) | | **TECHNICAL FIELDS SEARCHED (Int. Cl. ³)** |
| A | US-A-3 499 662 (PAUL) | | B 60 G<br>B 62 D |
| A | US-A-3 243 198 (SIMOVICH) | | |
| A | US-A-3 140 083 (PAUL) | | |
| A | US-A-4 195 859 (KYRIACOU) | | |

The present search report has been drawn up for all claims

| Place of search | Date of completion of the search | Examiner |
|---|---|---|
| THE HAGUE | 20-03-1984 | ESPEEL R.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82